# EUROPEAN PATENT SPECIFICATION

(11) **EP 2 666 674 B1**
(45) Date of publication and mention of the grant of the patent: **19.08.2015**
(21) Application number: 12736094.9
(22) Date of filing: 13.01.2012
(51) Int. Cl.: B60R 19/16, B60R 19/18, B60R 19/44, B60R 19/48, B60R 19/54

(54) **VEHICLE BODY FRONT STRUCTURE ON AUTOMOBILE**
FAHRZEUGKAROSSERIE-VORDERSTRUKTUR IN EINEM FAHRZEUG
STRUCTURE AVANT DE CARROSSERIE D'AUTOMOBILE

(30) Priority: 19.01.2011 JP 2011008809
(43) Date of publication of application: 27.11.2013
(73) Proprietor: Honda Motor Co., Ltd., Minato-ku Tokyo 107-8556 (JP)
(72) Inventor: GUNJI Yasuaki, Wako-shi Saitama 351-0193 (JP)
(74) Representative: Weickmann & Weickmann
(86) International application number: PCT/JP2012/050619
(87) International publication number: WO 2012/099020

(56) References cited:
- WO-A1-2004/071822
- JP-A- 2010 162 949
- JP-A- 2010 162 949
- JP-A- 2010 188 966

## Description

### TECHNICAL FIELD

The present invention relates to a vehicle body front structure according to the preamble part of claim 1.

### BACKGROUND ART

Such a vehicle body front structure having the features of the preamble part of claim 1 is known from Patent Document 1 below.

In this vehicle body front structure on an automobile, when an obstacle collides with a front face of the automobile, an impact absorbing member formed by bending a metal plate at a plurality of bent parts so as to protrude forward is deformed so as to be collapsed by the collision load to thus absorb collision energy; in this process, the impact absorbing member collapses and increases in pressure-receiving area to thus absorb the impact acting on the obstacle, and the impact absorbing member is also deformed so as to jut out downward to thus prevent the obstacle from being trapped under a lower face of the vehicle body.

### RELATED ART DOCUMENTS

### PATENT DOCUMENT

Patent Document 1: Japanese Patent Application Laid-open No. 2010-162949

### SUMMARY OF THE INVENTION

### PROBLEMS TO BE SOLVED BY THE INVENTION

With regard to an automobile such as an SUV (Sports Utility Vehicle) that often travels on uneven land, in some cases a lower face of a bumper face of a front bumper is fitted with a skid guard formed from a metal plate or a resin component, and this skid guard can prevent a radiator or an engine from being damaged by projecting objects, small stones, etc. on a road surface.

However, since the skid guard is disposed so as to follow the lower face of the impact absorbing member, even if the impact absorbing member attempts to deform so as to jut out downwardly when there is a frontal collision with an obstacle, it cannot deform freely due to interference from the skid guard, and there is a possibility that a desired impact absorption performance will not be exhibited.

It is an object of the present invention to provide a vehicle body front structure that allows an impact absorbing member to exhibit a desired impact absorption performance even when a skid guard is provided.

### MEANS FOR SOLVING THE PROBLEMS

In order to attain the above object, according to a first aspect of the present invention according to claim 1, there is provided a vehicle body front structure on an automobile, comprising a bumper beam that is disposed in a left-and-right direction in front of a front wheel, a vehicle body member that is disposed beneath the bumper beam, an impact absorbing member that provides a connection between the bumper beam and the vehicle body member, and a bumper face that covers the impact absorbing member, the impact absorbing member comprising an upper-end mounting portion that is fixed to the bumper beam, an upper face portion that extends forward from the upper-end mounting portion, a front face portion that extends downward from the upper face portion, a lower face portion that extends rearward from the front face portion, and a lower-end mounting portion that fixes a rear end of the lower face portion to the vehicle body member, the lower face portion that is disposed above so as to follow an approach inclined line extending from the front wheel to a lower face of the bumper face being divided into a front lower face portion and a rear lower face portion via a bent portion that extends in a left-and-right direction and bends downwardly, and the front lower face portion jutting out downwardly due to the bent portion being bent when the vehicle is involved in a frontal collision, characterized in that the structure comprises a skid guard that is fixed to the lower face of the bumper face and opposes the lower face portion of the impact absorbing member, and the skid guard is capable of being deformed or moved by being pushed by the deforming impact absorbing member when the vehicle is involved in a frontal collision.

The skid guard further comprises a cutout in a side flange formed on left and right side edges.

Furthermore, according to a second aspect of the present invention, in addition to the first aspect, the skid guard comprises a thin portion that provides a connection between the left and right cutouts.

Moreover, according to a third aspect of the present invention, in addition to the first aspect, wherein the skid guard is fixed to the bumper face via the front edge and the left and right side edges, and the strength with which the skid guard is fixed via the front edge is higher than the strength with which the skid guard is fixed via the left and right side edges.

Further, according to a fourth aspect of the present invention, in addition to any one of the first to third aspects, the front lower face portion and the rear lower face portion comprise a reinforcing portion that is disposed along the bent portion.

An under member 17 of an embodiment corresponds to the vehicle body member of the present invention, and a front lower face portion 20d and a rear lower face portion 20e of the embodiment correspond to the lower face portion of the present invention.

### EFFECTS OF THE INVENTION

In accordance with the first aspect of the present invention, when the automobile is involved in a frontal collision with an obstacle and the collision load is inputted from the bumper face into the impact absorbing member, the impact absorbing member collapses in the fore-and-aft direction to thus absorb collision energy. In this process, the impact absorbing member deforms so that its upper face, front face, and front lower face portion form one face that extends in the vertical direction, thus enabling the pressure-receiving area to increase and the impact to which the obstacle is subjected to be lightened. Furthermore, the bent part of the lower face portion bends and the front lower face portion juts out downwardly, thereby making it possible to prevent the obstacle from being trapped under the vehicle body lower face.

When the impact absorbing member deforms due to the collision load being inputted, there is a possibility that free deformation of the impact absorbing member will be hindered by interference from the skid guard, which opposes the lower face thereof, but since the skid guard is formed so as to be capable of being deformed or moved by being pushed by the deforming impact absorbing member, free deformation of the impact absorbing member is allowed to thus ensure impact absorption performance.

Furthermore, since the skid guard has the cutouts in the side flanges formed at the left and right side edges, the skid guard easily bends and deforms forward via a line joining the weak left and right cutouts when being pushed by the deforming impact absorbing member, thus ensuring free deformation for the impact absorbing member.

Moreover, in accordance with the second aspect of the present invention, since the skid guard has the thin portion connecting the left and right cutouts, the skid guard easily bends along this thin portion.

Furthermore, in accordance with the third aspect of the present invention, since the skid guard is fixed to the bumper face via the front edge and the left and right side edges, and the strength with which it is fixed via the front edge is higher than the strength with which it is fixed via the left and right side edges, when being pushed by the deforming impact absorbing member the fixing via the left and right side edges is detached and the skid guard easily swings forward around the front edge, thus ensuring free movement of the impact absorbing member.

Moreover, in accordance with the fourth aspect of the present invention, since the front lower face portion and the rear lower face portion of the impact absorbing member include the reinforcing portion disposed along the bent part, it is possible to concentrate stress on the bent part and reliably carry out bending.

### BRIEF DESCRIPTION OF DRAWINGS

[FIG. 1] FIG. 1 is a perspective view of a vehicle body front part of an automobile. (first embodiment)
[FIG. 2] FIG. 2 is a sectional view along line 2-2 in FIG. 1. (first embodiment)
[FIG. 3] FIG. 3 is an exploded perspective view of an essential part of FIG. 1. (first embodiment)
[FIG. 4] FIG. 4 is a view in the direction of arrow 4 in Fig. 2. (first embodiment)
[FIG. 5] FIG. 5 is a diagram for explaining the operation when the automobile is involved in a frontal collision. (first embodiment)
[FIG. 6] FIG. 6 is a perspective view of a skid guard. (second embodiment)
[FIG. 7] FIG. 7 is a perspective view of an impact absorbing member. (third embodiment)

### EXPLANATION OF REFERENCE NUMERALS AND SYMBOLS

13 Bumper face
17 Under member (vehicle body member)
19 Bumper beam
20 Impact absorbing member
20a Upper-end mounting portion
20b Upper face portion
20c Front face portion
20d Front lower face portion (lower face portion)
20e Rear lower face portion (lower face portion)
20f Lower-end mounting portion
20g Bead (reinforcing portion)
21 Skid guard
21d Side flange
21 e Cutout
21 f Thin portion
22 Front wheel
A Approach inclined line
d Bent part

### MODES FOR CARRYING OUT THE INVENTION

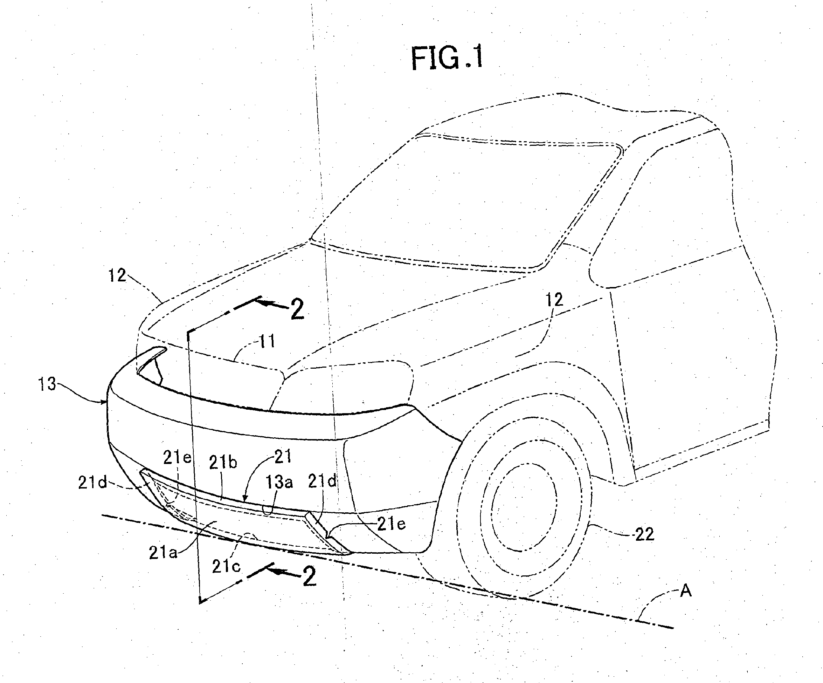

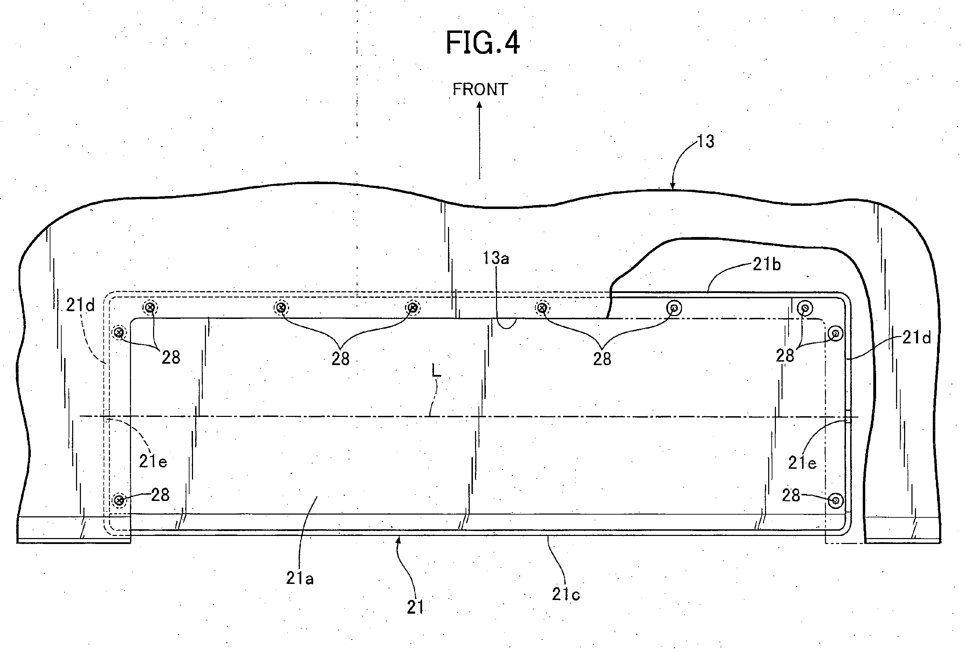

A first embodiment of the present invention is explained below by reference to FIG. 1 to FIG. 5. The fore-and-aft direction and the left-and-right direction referred to in the present specification are defined with reference to an occupant seated on a driver's seat.

### FIRST EMBODIMENT

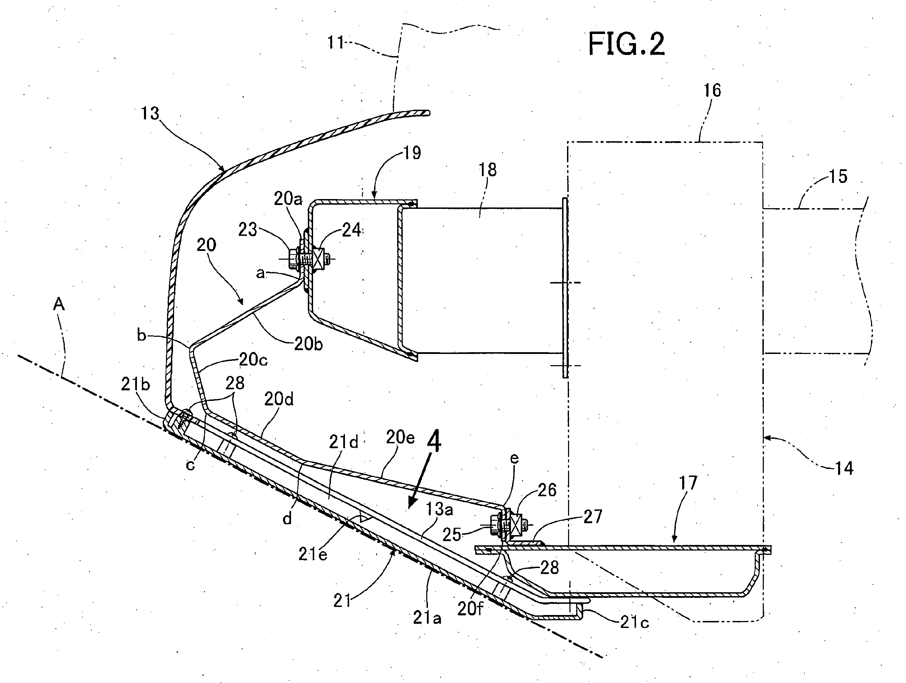

As shown in FIG. 1 and FIG. 2, disposed in a front part of a vehicle body of an SUV (Sports Utility Vehicle) type automobile is a bumper face 13 that is formed as a unit from a thin synthetic resin so as to be present in front of a front grill 11 and left and right front fenders 12 and 12. A frame-shaped bulkhead 14 that is disposed in the front part of the vehicle body and supports a radiator, which is not illustrated, includes left and right stays 16 and 16 that are connected to front ends of left and right front side frames 15 and 15 and extend in the vertical direction, and an under member 17 that provides a connection between lower ends of the left and right stays 16 and 16 and extends in the left-and-right direction.

A bumper beam 19 is supported via left and right brackets 18 and 18 on front faces of the left and right stays 16 and 16 of the bulkhead 14. An impact absorbing member 20 formed by bending a metal plate is supported on the bumper beam 19 extending in the left-and-right direction and the under member 17 extending in the left-and-right direction. The bumper face 13 covers the impact absorbing member 20 and the bumper beam 19 from beneath, the front, and above. A skid guard 21 is provided on a lower face of the bumper face 13, the skid guard 21 being formed from a metal plate or a resin component and opposing a lower face of the impact absorbing member 20 across a slight gap. The skid guard 21 is for protecting an engine or a radiator when the automobile travels on uneven land, etc., and it is disposed so as to follow a tangent (approach inclined line A) drawn from left and right wheels 22 and 22 with respect to the lower face of the bumper face 13.

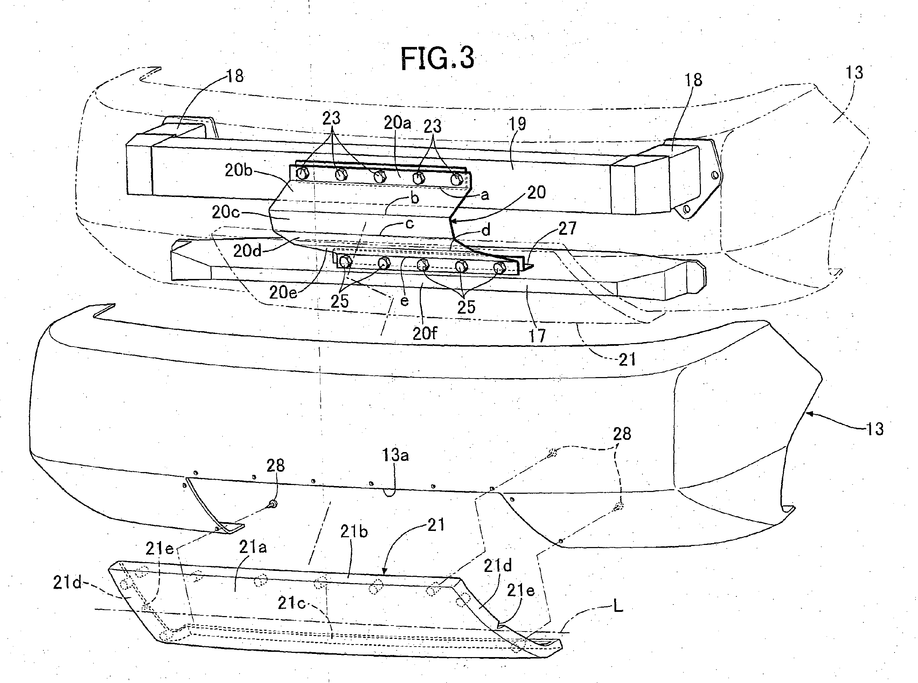

As shown in FIG. 2 and FIG. 3, the impact absorbing member 20 is bent via five bent parts a, b, c, d, and e extending in parallel to each other in the left-and-right direction, thus being divided into six rectangular faces, that is, an upper-end mounting portion 20a, an upper face portion 20b, a front face portion 20c, a front lower face portion 20d, a rear lower face portion 20e, and a lower-end mounting portion 20f. The upper-end mounting portion 20a is fixed to a front face of the bumper beam 19 via bolts 23 and nuts 24, and the lower-end mounting portion 20f is fixed via bolts 25 and nuts 26 to a bracket 27 provided on an upper face of the under member 17 positioned beneath and to the rear of the bumper beam 19.

The upper face portion 20b extends downward and to the front from the bent part a at the lower end of the upper-end mounting portion 20a, which extends in the vertical direction. The front face portion 20c extends substantially downward from the bent part b at the front end of the upper face portion 20b. The front lower face portion 20d extends downward and to the rear from the bent part c at the lower end of the front face portion 20c. The rear lower face portion 20e extends downward and to the rear from the bent part d at the rear end of the front lower face portion 20d at a nearly horizontal angle. The lower-end mounting portion 20f extends downward in the vertical direction from the bent part e at the rear end of the rear lower face portion 20e. The upper face portion 20b, the front face portion 20c, the front lower face portion 20d and the rear lower face portion 20e of the impact absorbing member 20 bend convexly outward at the bent parts b, c, and d. The dimensions of the skid guard 21 are set to be slightly larger than the front lower face portion 20d and the rear lower face portion 20e of the impact absorbing member 20, which opposes the upper face of the skid guard 21 across a slight gap.

As shown in FIG. 2 to FIG. 4, the skid guard 21 is press formed from a metal plate and includes a front flange 21b, a rear flange 21c, and left and right side flanges 21d and 21d that protrude upward from the outer periphery of a rectangular main body portion 21 a. Cutouts 21e and 21e are formed in central parts in the longitudinal direction of the left and right side flanges 21d and 21d in order to locally reduce the strength. A squared U-shaped cutout 13a is formed in the lower face of the bumper face 13, and front, left, and right edge parts of the skid guard 21 are superimposed on the edge part of the cutout 13a and fixed by means of a plurality of self-tapping screws 28.

The operation of the embodiment of the present invention having the above-mentioned arrangement is now explained.

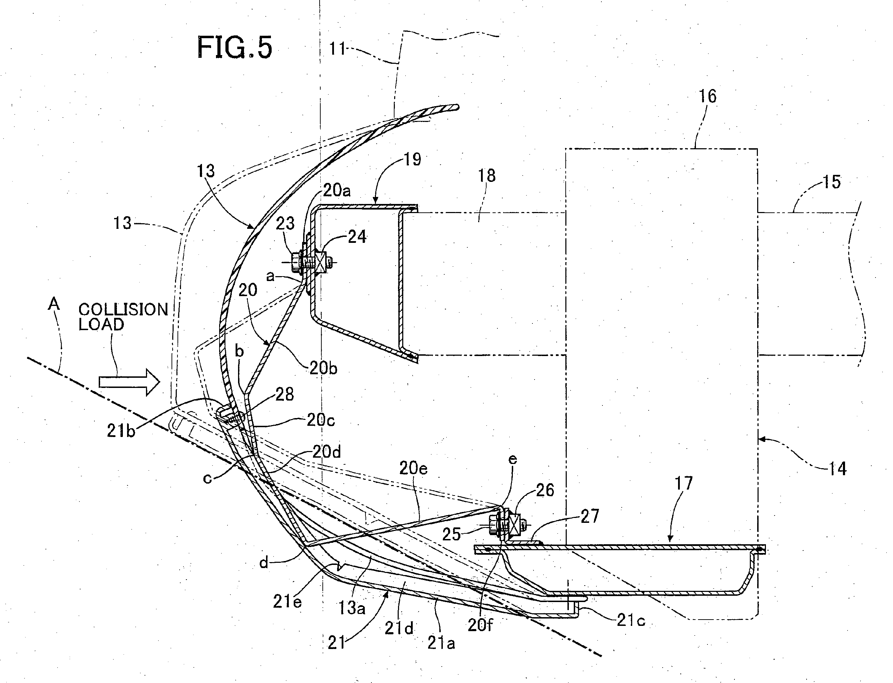

As shown in FIG. 5, when the automobile is involved in a frontal collision with an obstacle such as a pedestrian, the bumper face 13 made of a thin synthetic resin is easily made to buckle by the collision load, and the collision load is inputted into the front face portion 20c of the impact absorbing member 20. Since the front lower face portion 20d and the rear lower face portion 20e are connected via the weak bent part d, the length in the fore-and-aft direction of the front lower face portion 20d and the rear lower face portion 20e is larger than the length in the fore-and-aft direction of the upper face portion 20b, and they buckle easily, the three bent parts a, b, and c on the upper side deform so as to increase the angle, the two bent parts d and e on the lower side deform so as to decrease the angle, and the positions of the three bent parts b, c, and d in the middle move rearward and downward.

As a result, the upper face portion 20b, the front face portion 20c and the front lower face portion 20d move rearward while deploying into a substantially vertically extending plane, thus ensuring that there is a stroke for absorbing the collision load and ensuring that there is a wide pressure-receiving area that receives the collision load, and it is therefore possible to lighten the impact imposed on the pedestrian. Furthermore, since the front lower face portion 20d moves downward while rising, the gap between the road surface and the bent part d at the lower end of the front lower face portion 20d can be made small, thus preventing the body of the pedestrian from being trapped under the lower face of the vehicle body.

When the impact absorbing member 20 deforms downward, since the skid guard 21 is positioned close to the underneath thereof, the bent part d of the impact absorbing member 20 might interfere with a reverse face of the skid guard 21, free deformation of the impact absorbing member 20 might be hindered, and there is a possibility that the impact absorbing effect will not be fully exhibited.

However, in accordance with the present embodiment, when the impact absorbing member 20 is downwardly deformed by the collision load of a frontal collision, the skid guard 21, whose reverse face is pushed downwardly by the bent part d of the impact absorbing member 20, bends downwardly into a '<' shape on a weak bending line L joining the cutouts 21e and 21 e of the left and right side flanges 21d and 21d. In this process, since some of the self-tapping screws 28 fixing the skid guard 21 to the cutout 13a of the bumper face 13 come off, free bending of the skid guard 21 is promoted.

In this way, when the vehicle is involved in a frontal collision with a pedestrian, since the skid guard 21 bends downwardly into the '<' shape on the bending line L, the impact absorbing member 20 disposed thereabove can deform downwardly without interference from the skid guard 21, and the impact absorption performance of the impact absorbing member 20 can be exhibited to the maximum.

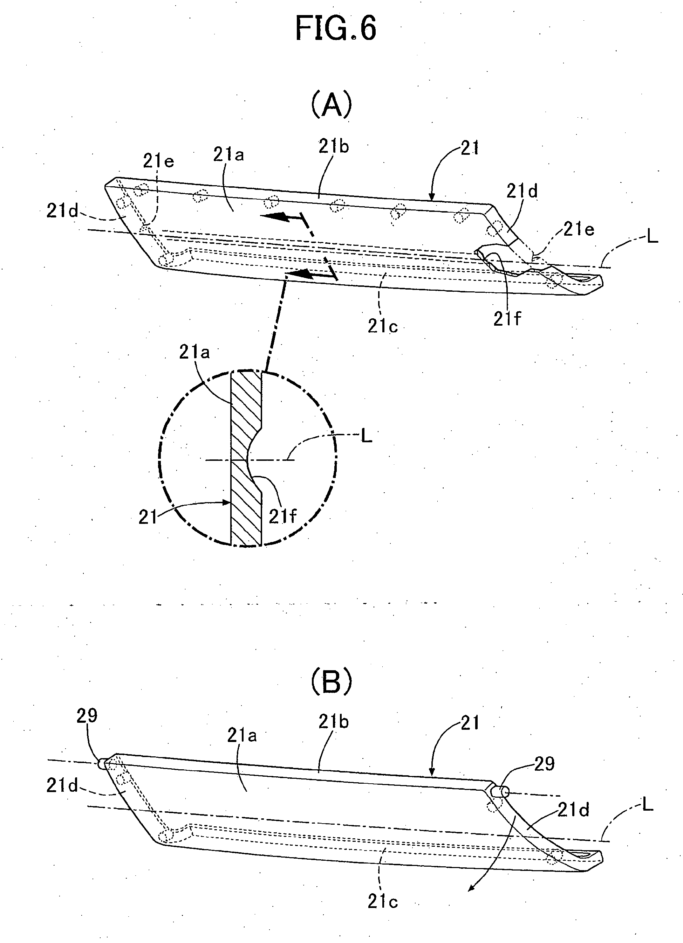

A second embodiment of the present invention is now explained by reference to FIG. 6.

### [SECOND EMBODIMENT]

FIG. 6 (A) shows a second embodiment of the present invention. A thin portion 21f is formed along the bending line L of the skid guard 21. Because of the thin portion 21f, the bending stiffness of the skid guard 21 locally decreases, and the skid guard 21 can reliably be bent along the bending line L.

FIG. 6 (B) shows a further vehicle body front structure. A pair of support shafts 29 and 29 extending in the left-and-right direction are projectingly provided at the front end of the skid guard 21, and these support shafts 29 and 29 are rotatably supported on the bumper face 13. Since the front part of the skid guard 21 is supported by the support shafts 29 and 29, the support rigidity of the front part becomes higher than the support rigidity of other portions of the skid guard 21 supported by the self-tapping screws 28. Therefore, when the vehicle is involved in a frontal collision and the impact absorbing member 20 deforms downwardly and pushes the reverse face of the skid guard 21, the skid guard 21 swings downwardly around the support shafts 29 and 29 in the front part due to the self-tapping screws 28 in the rear part becoming separated, and downward deformation of the impact absorbing member 20 is thus allowed.

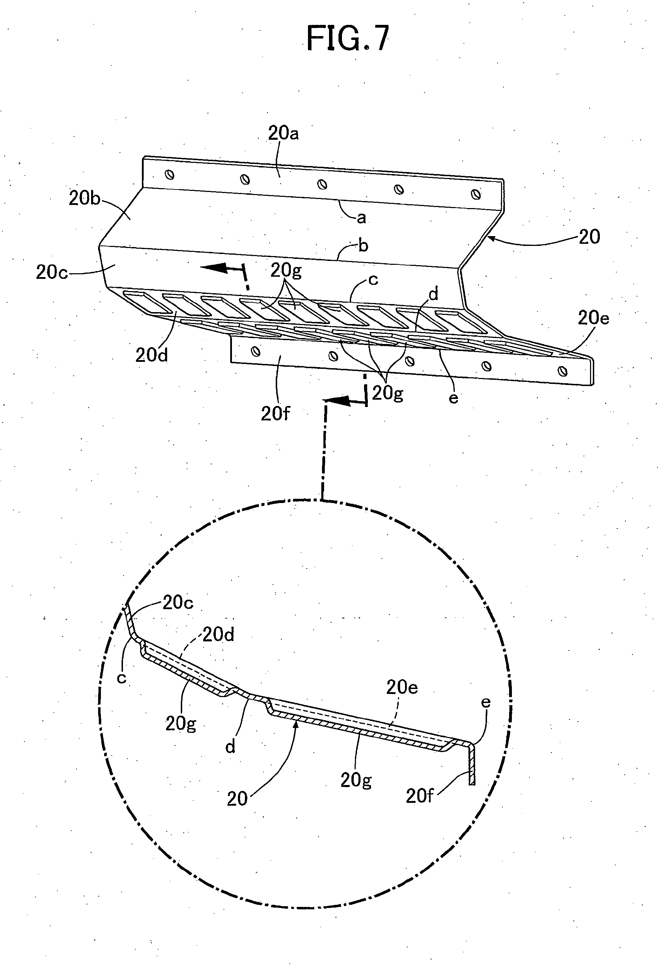

A third embodiment of the present invention is now explained by reference to FIG. 7.

### [THIRD EMBODIMENT]

In the third embodiment, a large number of beads 20g disposed along the bent part d are formed on the front lower face portion 20d in front of the bent part d and the rear lower face portion 20e to the rear of the bent part d. Due to the beads 20g being formed, the plane stiffness of the front lower face portion 20d and the rear lower face portion 20e increases to thus make it easy for stress to be concentrated on the bent part d, thereby making the impact absorbing member 20 reliably bend via the bent part d and making the front lower face portion 20d move downward.

Embodiments of the present invention are explained above, but the present invention may be modified in a variety of ways as long as the modifications do not depart from the scope of the claims.

For example, in the embodiments the skid guard 21 is mounted on the cutout 13a of the bumper face 13, but a skid guard 21 may be mounted so as to be superimposed on a weak part formed by thinning part of a bumper face 13.

Furthermore, fixing means for the skid guard 21 is not limited to the self-tapping screws 28 of the embodiments.

Moreover, a vehicle body member to which the lower-end mounting portion 20f of the impact absorbing member 20 is fixed is not limited to the under member 17 of the bulkhead 14 of the embodiment.

## Claims

1. A vehicle body front structure on an automobile, comprising a bumper beam (19) that is disposed in a left-and-right direction in front of a front wheel (22), a vehicle body member (17) that is disposed beneath the bumper beam (19), an impact absorbing member (20) that provides a connection between the bumper beam (19) and the vehicle body member (17), and a bumper face (13) that covers the impact absorbing member (20),
the impact absorbing member (20) comprising an upper-end mounting portion (20a) that is fixed to the bumper beam (19), an upper face portion (20b) that extends forward from the upper-end mounting portion (20a), a front face portion (20c) that extends downward from the upper face portion (20b), a lower face portion (20d, 20e) that extends rearward from the front face portion (20c), and a lower-end mounting portion (20f) that fixes a rear end of the lower face portion (20d, 20e) to the vehicle body member (17),
the lower face portion (20d, 20e) that is disposed above so as to follow an approach inclined line (A) extending from the front wheel (22) to a lower face of the bumper face (13) being divided into a front lower face portion (20d) and a rear lower face portion (20e) via a bent portion (d) that extends in a left-and-right direction and bends downwardly, and the front lower face portion (20d) jutting out downwardly due to the bent portion (d) being bent when the vehicle is involved in a frontal collision,
**characterized in that** the structure comprises a skid guard (21) that is fixed to the lower face of the bumper face (13) and opposes the lower face portion (20d, 20e) of the impact absorbing member (20), and the skid guard (21) is capable of being deformed or moved by being pushed by the deforming impact absorbing member (20) when the vehicle is involved in a frontal collision,
wherein the skid guard (21) comprises a cutout (21e) in a side flange (21d) formed on left and right side edges.

2. The vehicle body front structure on an automobile according to Claim 1, wherein the skid guard (21) comprises a thin portion (21f) that provides a connection between the left and right cutouts (21e).

3. The vehicle body front structure on an automobile according to Claim 1, wherein the skid guard (21) is fixed to the bumper face (13) via the front edge and the left and right side edges, and the strength with which the skid guard (21) is fixed via the front edge is higher than the strength with which the skid guard (21) is fixed via the left and right side edges.

4. The vehicle body front structure on an automobile according to any one of Claim 1 to Claim 3, wherein the front lower face portion (20d) and the rear lower face portion (20e) comprise a reinforcing portion (20g) that is disposed along the bent portion (d).

## Patentansprüche

1. Fahrzeugkörperfrontstruktur an einem Kraftfahrzeug, umfassend einen Stoßstangenträger (19), welcher in einer Links-und-Rechts-Richtung vor einem Vorderrad (22) angeordnet ist, ein Fahrzeugkörperelement (17), welches unterhalb des Stoßstangenträgers (19) angeordnet ist, ein stoßabsorbierendes Element (20), welches eine Verbindung zwischen dem Stoßstangenträger (19) und dem Fahrzeugkörperelement (17) bereitstellt, und eine Stoßstangenfläche (13), welche das stoßabsorbierende Element (20) abdeckt,
wobei das stoßabsorbierende Element (20) einen Oberes-Ende-Montageabschnitt (20a) umfasst, welcher an dem Stoßstangenträger (19) fixiert ist, einen oberen Flächenabschnitt (20b) umfasst, welcher sich von dem Oberes-Ende-Montageabschnitt (20a) aus nach vorne erstreckt, einen vorderen Flächenabschnitt (20c) umfasst, welcher sich von dem oberen Flächenabschnitt (20b) aus nach unten erstreckt, einen unteren Flächenabschnitt (20d, 20e) umfasst, welcher sich von dem vorderen Flächenabschnitt (20c) nach hinten erstreckt, und einen Unteres-Ende-Montageabschnitt (20f) umfasst, welcher ein hinteres Ende von dem unteren Flächenabschnitt (20d, 20e) an dem Fahrzeugkörperelement (17) fixiert,
wobei der untere Flächenabschnitt (20d, 20e), welcher darüber derart angeordnet ist, dass er einer geneigten Annäherungslinie (A) folgt, welche sich von dem Vorderrad (22) zu einer unteren Fläche von der Stoßstangenfläche (13) erstreckt, in einen vorderen unteren Flächenabschnitt (20d) und einen hinteren unteren Flächenabschnitt (20e) vermittels eines gebogenen Abschnitts (d) geteilt ist, welcher sich in einer Links-und-Rechts-Richtung erstreckt und nach unten gebogen ist, und der vordere untere Flächenabschnitt (20d) aufgrund des gebogenen Abschnitts (d), welcher gebogen wird, wenn das Fahrzeug in eine Frontalkollision verwickelt ist, nach unten hervorsteht,
**dadurch gekennzeichnet, dass** die Struktur einen Unterfahrschutz (21) umfasst, welcher an der unteren Fläche von der Stoßstangenfläche (13) und gegenüber dem unteren Flächenabschnitt (20d, 20e) von dem stoßabsorbierenden Element (20) fixiert ist, und der Unterfahrschutz (21) in der Lage ist, dann, wenn das Fahrzeug in eine Frontalkollision verwickelt ist, verformt oder bewegt zu werden, indem er durch das Verformen des stoßabsorbierenden Elements (20) geschoben/gedrückt wird,
wobei der Unterfahrschutz (21) einen Ausschnitt (21e) in einem Seitenflansch (21d) umfasst, welcher an linken und rechten Seitenrändern ausgebildet ist.

2. Fahrzeugkörperfrontstruktur an einem Kraftfahrzeug nach Anspruch 1, wobei der Unterfahrschutz (21) einen dünnen Abschnitt (21f) umfasst, welcher eine Verbindung zwischen dem linken und dem rechten Ausschnitt (21 e) bereitstellt.

3. Fahrzeugkörperfrontstruktur an einem Kraftfahrzeug nach Anspruch 1, wobei der Unterfahrschutz (21) an der Stoßstangenfläche (13) vermittels des vorderen Rands und der linken und rechten Seitenränder fixiert ist, und die Festigkeit, mit welcher der Unterfahrschutz (21) vermittels des vorderen Rands fixiert ist, höher ist als die Festigkeit, mit welcher der Unterfahrschutz (21) vermittels der linken und rechten Seitenränder fixiert ist.

4. Fahrzeugkörperfrontstruktur an einem Kraftfahrzeug nach einem der Ansprüche 1 bis 3, wobei der vordere untere Flächenabschnitt (20d) und der hintere untere Flächenabschnitt (20e) einen Verstärkungsabschnitt (20g) umfassen, welcher entlang des gebogenen Abschnitts (d) angeordnet ist.

## Revendications

1. Structure avant de carrosserie de véhicule sur une automobile, comprenant une poutre de pare-chocs (19) qui est disposée dans un sens gauche et droit en face d'une roue avant (22), un élément de carrosserie de véhicule (17) qui est disposé sous la poutre de pare-chocs (19), un élément amortisseur de chocs (20) qui fournit une liaison entre la poutre de pare-chocs (19) et l'élément de carrosserie de véhicule (17), et une face de pare-chocs (13) qui couvre l'élément amortisseur de chocs (20),
l'élément amortisseur de chocs (20) comprenant une portion de montage d'extrémité supérieure (20a) qui est fixée à la poutre de pare-chocs (19), une portion de face supérieure (20b) qui s'étend vers l'avant depuis la portion de montage d'extrémité supérieure (20a), une portion de face avant (20c) qui s'étend vers le bas depuis la portion de face supérieure (20b), une portion de face inférieure (20d, 20e) qui s'étend vers l'arrière depuis la portion de face avant (20c), et une portion de montage d'extrémité inférieure (20f) qui fixe une extrémité arrière de la portion de face inférieure (20d, 20e) à l'élément de la carrosserie de véhicule (17),
la portion de face inférieure (20d, 20e) qui est disposée au-dessus de manière à suivre une ligne inclinée (A) s'étendant de la roue avant (22) à une face inférieure de la face du pare-chocs (13) étant divisée en une portion de face inférieure avant (20d) et une portion de face inférieure arrière (20e) au moyen d'une portion courbe (d) qui s'étend dans un sens gauche et droit et se courbe vers le bas, et la portion de face inférieure avant (20d) dépassant vers le bas du fait de la portion courbe (d) étant courbée lorsque le véhicule est impliqué dans une collision frontale,
**caractérisée en ce que** la structure comprend une plaque de protection du carter inférieur (21) qui est fixée à la face inférieure de la face du pare-chocs (13) et oppose la portion de face inférieure (20d, 20e) de l'élément amortisseur de chocs (20), et la plaque de protection du carter inférieur (21) peut être déformée ou déplacée en étant poussée par l'élément amortisseur de chocs se déformant (20) lorsque le véhicule est impliqué dans une collision frontale, dans laquelle la plaque de protection du carter inférieur (21) comprend une découpure (21e) dans une bride latérale (21d) formée sur des bords latéraux gauche et droit.

2. Structure avant de carrosserie de véhicule sur une automobile selon la revendication 1, dans laquelle la plaque de protection du carter inférieur (21) comprend une mince portion (21f) qui fournit une liaison entre les découpures gauche et droite (21e).

3. Structure avant de carrosserie de véhicule sur une automobile selon la revendication 1, dans laquelle la plaque de protection du carter inférieur (21) est fixée à la face du pare-chocs (13) au moyen du bord avant et des bords latéraux gauche et droit, et la force avec laquelle la plaque de protection du carter inférieur (21) est fixée au moyen du bord avant est supérieure à la force avec laquelle la plaque de protection du carter inférieure (21) est fixée au moyen des bords latéraux gauche et droit.

4. Structure avant de carrosserie de véhicule sur une automobile selon l'une quelconque des revendications 1 à 3, dans laquelle la portion de face inférieure avant (20d) et la portion de face inférieure arrière (20e) comprennent une portion de renforcement (20g) qui est disposée le long de la portion courbe (d).
